(19) **Europäisches Patentamt / European Patent Office / Office européen des brevets**

(11) **EP 2 249 006 B1**

(12) **EUROPEAN PATENT SPECIFICATION**

(45) Date of publication and mention of the grant of the patent:
**30.03.2016 Bulletin 2016/13**

(51) Int Cl.:
***F02C 9/20*** *(2006.01)*

(21) Application number: **10162044.1**

(22) Date of filing: **05.05.2010**

(54) **Device and method for controlling the exhaust temperature of a gas turbine of a power plant**

Vorrichtung und Verfahren zur Regelung der Abgastemperatur einer Kraftwerks-Gasturbine

Dispositif et procédé de réglage de la température de gaz d'échappement d'une turbine à gaz d'une centrale

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **06.05.2009 IT MI20090766**

(43) Date of publication of application:
**10.11.2010 Bulletin 2010/45**

(73) Proprietor: **Ansaldo Energia S.p.A.**
**Genova (IT)**

(72) Inventors:
• **Bonzani, Federico**
**16156 Genova (IT)**
• **Pesce, Paolo**
**16152 Genova (IT)**
• **Piana, Carlo**
**21100 Varese (IT)**
• **Zito, Domenico**
**16154 Genova (IT)**

(74) Representative: **Bergadano, Mirko et al**
**Studio Torta S.p.A.**
**Via Viotti, 9**
**10121 Torino (IT)**

(56) References cited:
**EP-A- 1 036 924      WO-A-2009/016665**
**GB-A- 1 374 871      US-A1- 2006 042 258**

• **WATANABE M ET AL: "Development of a dynamical model for customerâ s gas turbine generator in industrial power systems" POWER AND ENERGY CONFERENCE, 2008. PECON 2008. IEEE 2ND INTERNATIONAL, IEEE, PISCATAWAY, NJ, USA, 1 December 2008 (2008-12-01), pages 514-519, XP031412964 ISBN: 978-1-4244-2404-7**

**Description**

The present invention relates to a device and method for controlling the exhaust temperature of a gas turbine of a power plant.

Plants for producing electricity are known, comprising a compressor, a combustion chamber, a gas turbine and a device for controlling the exhaust temperature of the gas turbine.

The compressor is provided with an inlet stage defined by a plurality of adjustable inlet guide vanes, the position of which regulates the air flow at the compressor inlet.

The device for controlling the temperature at the gas turbine exhaust comprises a module for regulating the position of the plurality of inlet guide vanes of the compressor so that the gas turbine exhaust temperature is equal to a fixed reference value, calculated a *priori*, and a module for regulating the supply of fuel into the combustion chamber.

Examples of a device for controlling the temperature at the gas turbine exhaust are known from US 2006/042258, EP 1036924 A, GB 1374871 A and the publication WATANABE M ET AL: "Development of a dynamical model for customers gas turbine generator in industrial power systems" POWER AND ENERGY CONFERENCE, 2008. PECON 2008. IEEE 2ND INTERNATIONAL, IEEE, PISCATAWAY, NJ, USA, 1 December 2008 (2008-12-01), pages 514-519, XP031412964 ISBN: 978-1-4244-2404-7.

However, the devices for controlling the gas turbine exhaust temperature thus configured are not able to optimize plant performance according to the variation of the different environmental conditions and of the type of plant in which they are installed, while keeping the pollutant emission levels under the limits of law.

It is therefore an object of the present invention to provide a method for controlling the exhaust temperature of a gas turbine of a plant for producing electricity, which is free from the prior art drawbacks identified herein; in particular, it is an object of the invention to provide a method for controlling the exhaust temperature of a gas turbine which is capable of optimizing plant performance.

In accordance with these objects, the present invention relates to a method for controlling the exhaust temperature of a gas turbine of a power plant according to claim 1.

It is a further object of the invention to provide a device for controlling the exhaust temperature of a gas turbine in a plant for producing electricity which is simple, cost-effective and capable of optimizing plant performance.

In accordance with these objects, the present invention relates to a device for controlling the exhaust temperature of a gas turbine of a power plant according to claim 3.

Further features and advantages of the present invention will be apparent from the following description of a non-limitative embodiment thereof, with reference to the figures in the accompanying drawings, in which:

- figure 1 diagrammatically shows a power plant for producing electricity;
- figure 2 diagrammatically shows the device for controlling the exhaust temperature of a gas turbine according to the present invention;
- figure 3 diagrammatically shows the exhaust temperature trend of the gas turbine according to the variation of the ratio between the actual power delivered by the plant and a base reference power in the actual environmental conditions.

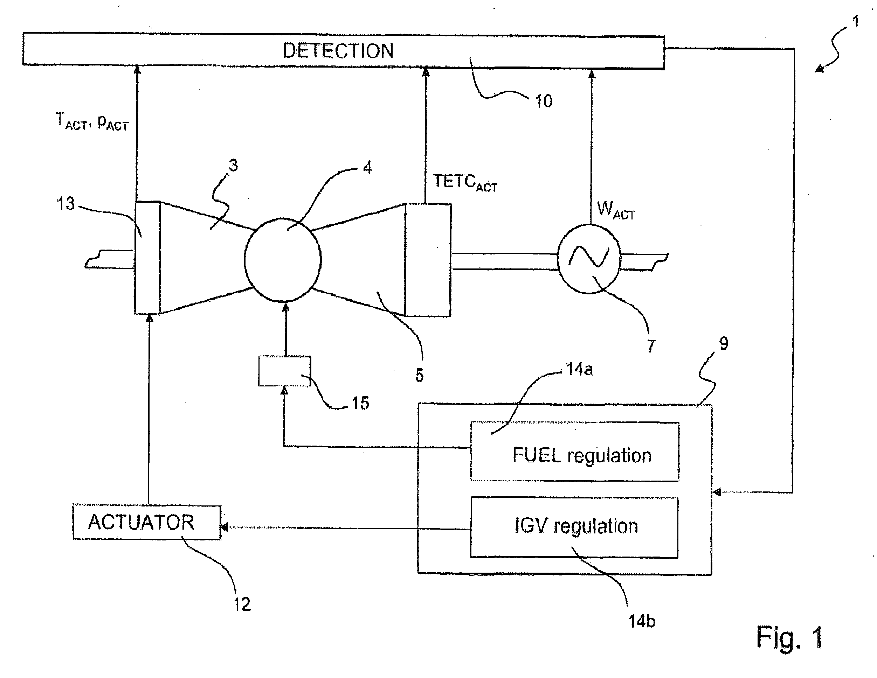

In figure 1, reference numeral 1 indicates a power plant for producing electricity comprising a compressor 3, a combustion chamber 4, a gas turbine 5, a generator 7 which is connected to the same shaft as the turbine 5 and transforms the mechanical power supplied by the turbine 5 into electrical power $W_{ACT}$, a device 9 for controlling the exhaust temperature of turbine 5, a detection module 10, and an actuator 12.

A variant (not shown) includes plant 1 being of the combined cycle type, also comprising a steam turbo assembly, in addition to gas turbine 5 and generator 7.

Compressor 3 is provided with an inlet stage 13 having a variable geometry. The inlet stage 13 comprises a plurality of inlet guide vanes (not shown for simplicity in the accompanying figures), commonly known as IGV, the inclination of which may be modified to regulate the air flow aspirated by the compressor 3 itself.

In particular, the inclination of the plurality of inlet guide vanes is regulated by the actuator 12, which is controlled by the device 9 for regulating the exhaust temperature of the turbine 5, as shown in detail below.

The detection module 10 comprises a plurality of sensors (not shown for simplicity in the appended figures), which detect a plurality of parameters related to plant 1 to be fed to the device 9 for controlling the exhaust temperature of turbine 5; in particular, the detection module 10 detects the following parameters:

- actual environmental temperature $T_{ACT}$, detected at the inlet of compressor 3;
- actual environmental pressure $p_{ACT}$ detected at the inlet of compressor 3;

- actual exhaust temperature $TETC_{ACT}$ of turbine 5;

- actual power $W_{ACT}$ delivered by plant 1, preferably detected at the terminals of the generator 7 by means of a wattmeter.

The device 9 for controlling the exhaust temperature of turbine 5 comprises a FUEL regulating module 14a for regulating the supply of fuel into the combustion chamber 4 and an IGV regulation module 14b for regulating the position of the plurality of inlet guide vanes of the compressor 3.

The FUEL regulation module 14a is configured to provide position signals to a plurality of actuators 15 (diagrammatically shown in figure 1 with one block) of respective valves (not shown) for feeding fuel to the combustion chamber 4.

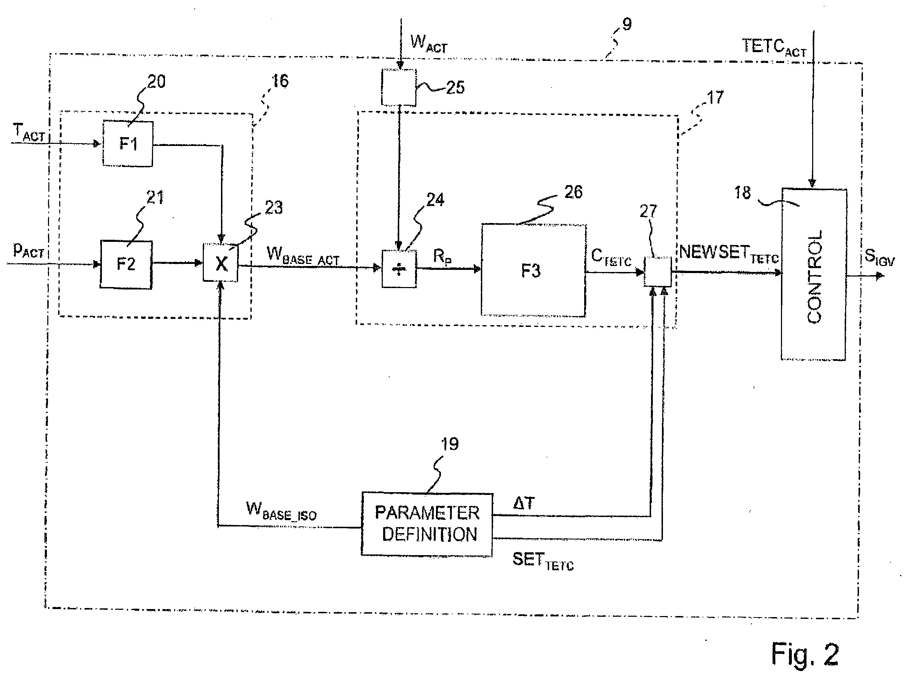

With reference to figure 2, the IGV regulation module 14b (diagrammatically indicated in figure 2 by a dash-and-dotted line) is configured to regulate the position of the plurality of inlet guide vanes of compressor 3 and comprises a first calculation module 16 (diagrammatically indicated in figure 2 by a dashed line) to calculate a reference base power in the actual environmental conditions on the basis of a reference base power value in standard environmental conditions $W_{BASE\_ISO}$, and on the basis of the values of actual environmental temperature $T_{ACT}$ and actual environmental pressure $p_{ACT}$, a second calculating module 17 (diagrammatically indicated in figure 2 by a dashed line) to calculate a reference value $NEWSET_{TETC}$ of the exhaust temperature of the gas turbine 5 on the basis of the reference base power in the actual environmental conditions $W_{BASE\_ACT}$ and on the basis of an actual delivered power $W_{ACT}$, a control module 18 configured to send a position signal $S_{IGV}$ to the actuator 12 on the basis of the actual exhaust temperature $TETC_{ACT}$ of the turbine 5 and on the basis of the reference temperature value $NEWSET_{TETC}$ calculated by the second calculation module 17, and a parameter definition module 19.

The first calculation module 16 comprises a first calculating block 20 for calculating a temperature correction factor $\alpha$ on the basis of the actual environmental temperature $T_{ACT}$ according to a function F1, a second calculating block 21 configured for calculating a pressure correction factor $\beta$ on the basis of the actual environmental pressure $p_{ACT}$ according to a function F2, and a multiplier node 23 for multiplying the temperature correction factor $\alpha$, the pressure corrector factor $\beta$, and the reference base power value $W_{BASE\_ISO}$ in standard environmental conditions so as to obtain the reference base power $W_{BASE\_ACT}$ in the actual environmental conditions.

The reference base power $W_{BASE\_ISO}$ in standard environmental conditions is a parameter determined by the parameter definition module 19 and is the maximum power, commonly named "base load", which may be delivered by the plant 1 in standard environmental conditions, i.e. at 15° C and 1013 mbars.

The reference base power $W_{BASE\_ACT}$ in actual environmental conditions is calculated by the multiplier node 23 and is the maximum power which may be delivered by the plant 1 in the actual environmental conditions, i.e. at temperature $T_{ACT}$ and pressure $p_{ACT}$.

The functions F1 and F2 are preferably tables obtained by means of calculations based on the characteristic curve of the gas turbine 5.

In the example described and illustrated herein, function F1 is defined by the following table:

| ACTUAL ENVIRONMENTAL TEMPERATURE $T_{ACT}$ | TEMPERATURE CORRECTION FACTOR $\alpha$ |
|---|---|
| -10 | 1.087 |
| -5 | 1.068 |
| 5 | 1.033 |
| 15 | 1 |
| 30 | 0.91 |
| 40 | 0.837 |

The second calculation module 16 comprises a divider node 24 for calculating a power ratio $R_P$ between the actual power $W_{ACT}$ delivered by the plant 1 and the reference base power $W_{BASE\_ACT}$ in the actual environmental conditions, a third calculation module 26 for calculating a temperature correction $C_{TETC}$ and a fourth calculating module 27 for calculating the reference value $NEWSET_{TETC}$ in accordance with the following formula:

$$NEWSET_{TETC} = SET_{TETC} - \Delta T + C_{TETC}$$

where

$C_{TETC}$ is the temperature correction calculated by the third calculating module 26;

$SET_{TETC}$ is the reference base value of the exhaust temperature of turbine 5 at the maximum power which may be delivered by the plant 1 determined by the parameter definition module 19 on the basis of requirements which are to be ensured, such as for example requirements related to power, efficiency, exhaust temperature of turbine 5 and combustion stability;

$\Delta T$ is a temperature offset adapted to avoid the onset of instability phenomena within the combustion chamber 4, normally indicated by the term "humming", and is determined by the parameter definition module 19.

The actual power $W_{ACT}$ is preferably filtered by a filter 25 before being fed to the divider node 24 for suppressing signal interference and oscillations.

The power ratio $R_P$ substantially expresses the actual productivity level of plant 1. If the power ratio $R_P$ is of 1, plant 1 is running at the top of its potentials, i.e. the actual delivered power $W_{ACT}$ is equal to the reference base power $W_{BASE\_ACT}$ in the actual environmental conditions, which coincides with the maximum deliverable power, while if the power ratio $R_P$ is lower than 1, plant 1 is not running at the top of its potentials.

The third calculating module 26 is configured so as to calculate the temperature correction $C_{TETC}$ to be added to the reference base value $SET_{TETC}$ of the exhaust temperature of turbine 5 on the basis of the power ratio $R_P$. In particular, the third calculating module 26 is configured to calculate the temperature correction $C_{TETC}$ on the basis of the power ratio $R_P$ according to an experimentally determined function F3.

In the example described and illustrated herein, function F3 is defined by the following table:

| POWER RATIO $R_P$ | CORRECTION TEMPERATURE $C_{TETC}$ [°C] |
|---|---|
| 0.45 | 5 |
| 0.55 | 5 |
| 0.65 | 2 |
| 0.8 | 0 |
| 1 | 0 |

The control module 18 is configured to send the position signal $S_{IGV}$ to the actuator 12 on the basis of the difference between the actual exhaust temperature $TETC_{ACT}$ of turbine 5 detected by the detection module 10 and the reference value of the exhaust temperature $NEWSET_{TETC}$ calculated by the second calculation module 16. In particular, the control module 18 is configured to generate a position signal $S_{IGV}$ such as to determine a variation of the position of the inlet guide vanes which is sufficient to cancel the difference between the actual exhaust temperature $TETC_{ACT}$ of the turbine 5 and the exhaust temperature reference value $NEWSET_{TETC}$ of the gas turbine 5.

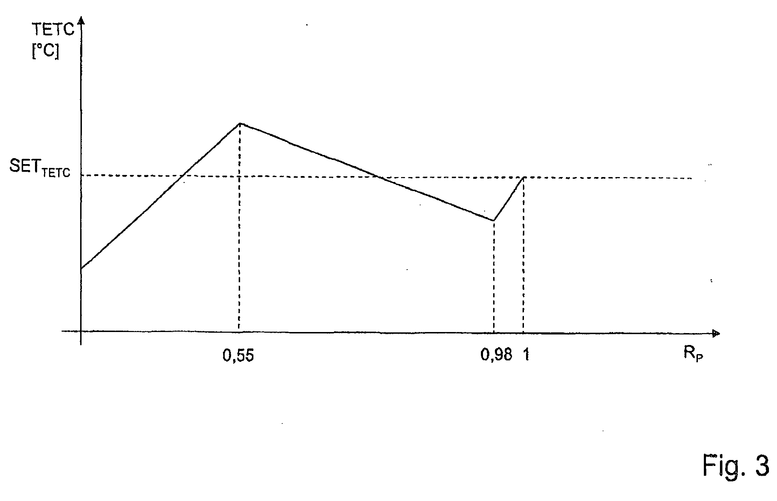

Figure 3 shows the exhaust temperature trend of the gas turbine 5 controlled by the device 9 for controlling the exhaust temperature according to the power ratio $R_P$.

In particular, the exhaust temperature trend TETC of the gas turbine 5 is characterized by a rising, as compared to a constant reference value of the known solutions (not shown), to the low power ratio values $R_P$ (approximately about 0.5) so as to decrease the carbon monoxide emissions (CO), and by a lowering at a high power ratio $R_P$ (approximately about 0.9) so as to contain nitrogen oxide emissions (NOx) and prevent the onset of combustion instability phenomena. Therefore, due to the control action of the device 9, the efficiency of plant 1 is higher, especially at low power values $W_{ACT}$. This results in apparent advantages especially when plant 1 is running at night, i.e. when the plant is running at minimum power.

In detail, the exhaust temperature trend TETC of the gas turbine 5 is mainly regulated by the IGV regulation module 14b for power ratio values $R_P$ between about 0.55, which corresponds to the maximum closing position of the inlet guide vanes, and about 0.95/0.98, which corresponds to the maximum opening position of the inlet guide vanes.

It is finally apparent that changes and variations may be made to the method and device described herein, without departing from the scope of the appended claims.

## Claims

1. Method for controlling the exhaust temperature of a gas turbine (5) of a power plant (1) comprising the step of regulating the position cf a plurality of inlet guide vanes of a compressor (3) of the plant (1) in such a way that an actual exhaust temperature ($TETC_{ACT}$) of the gas turbine (5) is equal to a reference value ($NEWSET_{TETC}$); and the step of calculating the reference value ($NEWSET_{TETC}$) on the basis of actual environmental conditions ($T_{ACT}$, $p_{ACT}$,

on the basis of an actual power ($W_{ACT}$) delivered by the plant (1) and on the basis of a first reference base power ($W_{BASE\_ISO}$) in standard environmental conditions; the step of calculating the reference value ($NEWSET_{TETC}$) comprising the steps of: calculating a second reference base power ($W_{BASE\_ACT}$) in actual environmental conditions; and calculating the reference value ($NEWSET_{TETC}$) on the basis of a ratio ($R_P$) between the actual power ($W_{ACT}$) and the second reference base power ($W_{BASE\_ACT}$); wherein the step of calculating the second reference base power ($W_{BRASE\_ACT}$) comprises detecting an actual environmental temperature ($T_{ACT}$); the method being **characterized in that** the step of calculating the second reference base power ($W_{BASE\_ACT}$) comprises the steps of:

- detecting an actual environmental pressure ($p_{ACT}$);
- calculating the first reference base power ($W_{BASE\_ISO}$) in standard environmental conditions;
- calculating the second reference base power ($W_{BASE\_ACT}$) in actual environmental conditions on the basis of the first reference base power ($W_{BASE\_ISO}$), of the actual environmental temperature ($T_{ACT}$) and of the actual environmental pressure ($p_{PACT}$).

2. Method according to Claim 1, wherein the step of calculating the reference value ($NEWSET_{TETC}$) comprises the steps of:

- calculating a temperature correction ($C_{TETC}$) on the basis of the ratio ($R_P$) between the actual power ($W_{ACT}$) and the second reference base power ($W_{BASE\_ACT}$);
- calculating the reference value ($NEWSET_{TETC}$) accorcing to the following formula:

$$NEWSET_{TETC} = SET_{TETC} - \Delta T + C_{TETC}$$

wherein:

$C_{TETC}$ is the temperature correction;
$SET_{TETC}$ is a reference base value of the exhaust temperature of the gas turbine (5) at the maximum power deliverable by the plant (1);
$\Delta T$ is a temperature offset.

3. Device for controlling the exhaust temperature of a gas turbine (5) of a power plant (1) comprising regulating means (18) for regulating the position of a plurality of inlet guide vanes of a compressor (3) of a plant (1) in such a way that the actual exhaust temperature ($TET_{ACT}$) of the gas turbine (5) 1s equal to a reference value ($NEWSET_{TETC}$); and calculating means (16, 17) for calculating the reference value ($NEWSET_{TETC}$) on the basis of actual environmental conditions ($T_{ACT, PACT}$), on the basis of an actual power ($W_{ACT}$) delivered by the plant (1) and on the basis of a first reference base power ($W_{BASE\_ISO}$) in standard environmental conditions; wherein the calculating means (16, 17) comprise a first calculating module (16) for calculating a second reference base power ($W_{BASE\_ACT}$) in actual environmental conditions and a second calculating module (17) for calculating the reference value ($NEWSET_{TETC}$) on the basis of a ratio ($R_P$) between the actual power ($W_{ACT}$) and the second reference base power ($W_{BASE\_ACT}$); the device being **characterized in that** the first calculating module (16) is configured to calculate the second reference base power ($W_{BASE\_ACT}$) in actual environmental conditions on the basis of the first reference base power ($W_{BASE\_ISO}$) in standard environmental conditions and on the basis of the values of actual environmental temperature ($T_{ACT}$) and actual environmental pressure ($p_{ACT}$).

**Patentansprüche**

1. Verfahren zum Steuern der Abgastemperatur einer Gasturbine (5) einer Kraftwerksanlage (1), aufweisend den Schritt des Regulierens der Position einer Vielzahl von Einlassleitschaufeln eines Kompressors (3) der Anlage (1) derart, dass eine tatsächliche Abgastemperatur ($TETC_{ACT}$) der Gasturbine (5) gleich einem Referenzwert (NEWSET$_{TETC}$) ist; und den Schritt des Berechnens des Referenzwerts (NEWSET$_{TETC}$) auf der Basis der tatsächlichen Umweltbedingungen ($T_{ACT}$, $p_{ACT}$), auf der Basis einer tatsächlichen Leistung ($W_{ACT}$), die von der Anlage (1) geliefert wird, und auf der Basis einer ersten Referenzbasisleistung ($W_{BASE\_ISO}$) bei Standardumweltbedingungen; wobei der Schritt des Berechnens des Referenzwertes (NEWSET$_{TETC}$) die Schritte aufweist:

Berechnen einer zweiten Referenzbasisleistung ($W_{BASE\_ACT}$) bei tatsächlichen Umweltbedingungen; und Berechnen des Referenzwertes (NEWSET$_{TETC}$) auf der Basis eines Verhältnisses (R$_P$) zwischen der tatsächlichen Leistung (W$_{ACT}$) und der zweiten Referenzbasisleistung (W$_{BASE\_ACT}$); und wobei der Schritt des Berechnens der zweiten Referenzbasisleistung (W$_{BASE\_ACT}$) das Erfassen einer tatsächlichen Umwelttemperatur (T$_{ACT}$) aufweist; und wobei das Verfahren **dadurch gekennzeichnet ist, dass** der Schritt des Berechnens der zweiten Referenzbasisleistung (W$_{BASE\_ACT}$) die Schritte aufweist:

- Erfassen eines tatsächlichen Umweltdruckes (p$_{ACT}$);
- Berechnen der ersten Referenzbasisleistung (W$_{BASE\_ISO}$) bei Standardumweltbedingungen;
- Berechnen der zweiten Referenzbasisleistung (W$_{BASE\_ACT}$) bei tatsächlichen Umweltbedingungen auf der Basis der ersten Referenzbasisleistung (W$_{BASE\_ISO}$), der tatsächlichen Umwelttemperatur (T$_{ACT}$) und des tatsächlichen Umweltdruckes (p$_{ACT}$).

2. Verfahren nach Anspruch 1, wobei der Schritt des Berechnens des Referenzwertes (NEWSET$_{TETC}$) die Schritte aufweist:

- Berechnen einer Temperaturkorrektur (C$_{TETC}$) auf der Basis des Verhältnisses (R$_P$) zwischen der tatsächlichen Leistung (W$_{ACT}$) und der zweiten Referenzbasisleistung ($_{WBASE\_ACT}$);
- Berechnen des Referenzwertes (NEWSET$_{TETC}$) gemäß der folgenden Formel:

$$NEWSET_{TETC} = SET_{TETC} - \Delta T + C_{TETC}$$

wobei:

C$_{TETC}$ die Temperaturkorrektur ist;
SET$_{TETC}$ ein Referenzbasiswert der Abgastemperatur der Gasturbine (5) bei der maximalen Leistung ist, die von der Anlage (1) geliefert wird;
$\Delta T$ eine Temperaturabweichung ist.

3. Vorrichtung zum Steuern der Abgastemperatur einer Gasturbine (5) einer Kraftwerksanlage (1), aufweisend ein Regulierungsmittel (18) zum Regulieren der Position einer Vielzahl von Einlassleitschaufeln eines Kompressors (3) einer Anlage (1) derart, dass die tatsächliche Abgastemperatur (TET$_{ACT}$) der Gasturbine (5) gleich einem Referenzwert (NEWSET$_{TETC}$) ist; und ein Berechnungsmittel (16, 17) zum Berechnen des Referenzwertes (NEWSET$_{TETC}$) auf der Basis der tatsächlichen Umweltbedingungen (T$_{ACT}$, p$_{ACT}$), auf der Basis einer tatsächlichen Leistung (W$_{ACT}$), die von der Anlage (1) geliefert wird, und auf der Basis einer ersten Referenzbasisleistung (W$_{BASE\_ISO}$) bei Standardumweltbedingungen; wobei das Berechnungsmittel (16, 17) ein erstes Berechnungsmodul (16) zum Berechnen einer zweiten Referenzbasisleistung (W$_{BASE\_ACT}$) bei tatsächlichen Umweltbedingungen und ein zweites Berechnungsmodul (17) zum Berechnen des Referenzwertes (NEWSET$_{TETC}$) auf der Basis eines Verhältnisses (R$_p$) zwischen der tatsächlichen Leistung (W$_{ACT}$) und der zweiten Referenzbasisleistung (W$_{BASE\_ACT}$) umfasst; wobei die Vorrichtung **dadurch gekennzeichnet ist, dass** das erste Berechnungsmodul (16) dazu ausgebildet ist, die zweite Referenzbasisleistung (W$_{BASE\_ACT}$) bei tatsächlichen Umweltbedingungen auf der Basis der ersten Referenzbasisleistung (W$_{BASE\_ISO}$) bei Standardumweltbedingungen, und auf der Basis der Werte der tatsächlichen Umwelttemperatur (T$_{ACT}$) und des tatsächlichen Umweltdruckes (p$_{ACT}$) zu berechnen.

**Revendications**

1. Procédé de réglage de la température d'échappement d'une turbine à gaz (5) d'une centrale électrique (1) comprenant l'étape de régulation de la position d'une pluralité d'aubes directrices d'entrée d'un compresseur (3) de la centrale (1) de sorte qu'une température d'échappement réelle (TETC$_{ACT}$) de la turbine à gaz (5) soit égale à une valeur de référence (NEWSET$_{TETC}$); et l'étape de calcul de la valeur de référence (NEWSETTETc) sur la base de conditions environnementales réelles (T$_{ACT}$, P$_{ACT}$), sur la base d'une puissance réelle (W$_{ACT}$) délivrée par la centrale (1) et sur la base d'une première puissance de base de référence (W$_{BASE\_ISO}$) dans des conditions environnementales standard ; l'étape de calcul de la valeur de référence (NEWSET$_{TETC}$) comprenant les étapes de: calcul d'une seconde puissance de base de référence (W$_{BASE\_ACT}$) dans des conditions environnementales réelles ; et calcul de la valeur de référence (NEWSET$_{TETC}$) sur la base d'un rapport (R$_P$) entre la puissance réelle (W$_{ACT}$) et la seconde puissance de base de référence (W$_{BASE\_ACT}$); dans lequel l'étape de calcul de la seconde puissance de base de référence (W$_{BASE\_ACT}$) comprend la détection d'une température environnementale réelle (T$_{ACT}$); le procédé étant **caractérisé en ce que** l'étape de calcul de la seconde puissance de base de référence (W$_{BASE\_ACT}$) comprend les étapes de:

- détection d'une pression environnementale réelle (P$_{ACT}$);
- calcul de la première puissance de base de référence (W$_{BASE\_ISO}$) dans des conditions environnementales standard ;
- calcul de la seconde puissance de base de référence (W$_{BASE\_ACT}$) dans des conditions environnementales réelles sur la base de la première puissance de base de référence (W$_{BASE\_ISO}$), de la température environnementale réelle (T$_{ACT}$) et de la pression environnementale réelle (P$_{ACT}$).

2. Procédé selon la revendication 1, dans lequel l'étape de calcul de la valeur de référence (NEWSET$_{TETC}$) comprend les étapes de:

- calcul d'une correction de température (C$_{TETC}$) sur la base du rapport (R$_P$) entre la puissance réelle (W$_{ACT}$) et la seconde puissance de base de référence (W$_{BASE\_ACT}$);
- calcul de la valeur de référence (NEWSET$_{TETC}$) selon la formule suivante:

$$NEWSET_{TETC} = SET_{TETC} - \Delta T + C_{TETC}$$

dans laquelle:

C$_{TETC}$ est la correction de température ;
SET$_{TETC}$ est une valeur de base de référence de la température d'échappement de la turbine à gaz (5) à la puissance maximale pouvant être délivrée par la centrale (1) ;
$\Delta T$ est une compensation de température.

3. Dispositif de réglage de la température d'échappement d'une turbine à gaz (5) d'une centrale électrique (1) comprenant un moyen de régulation (18) pour réguler la position d'une pluralité d'aubes directrices d'entrée d'un compresseur (3) d'une centrale (1) de sorte que la température d'échappement réelle (TETC$_{ACT}$) de la turbine à gaz (5) soit égale à une valeur de référence (NEWSET$_{TETC}$); et des moyens de calcul (16, 17) pour calculer la valeur de référence (NEWSET$_{TETC}$) sur la base de conditions environnementales réelles (T$_{ACT}$, P$_{ACT}$), sur la base d'une puissance réelle (W$_{ACT}$) délivrée par la centrale (1) et sur la base d'une première puissance de base de référence (W$_{BASE\_ISO}$) dans des conditions environnementales standard, dans lequel les moyens de calcul (16, 17) comprennent un premier module de calcul (16) pour calculer une seconde puissance de base de référence (W$_{BASE\_ACT}$) dans des conditions environnementales réelles et un second module de calcul (17) pour calculer la valeur de référence (NEWSET$_{TETC}$) sur la base d'un rapport (R$_P$) entre la puissance réelle (W$_{ACT}$) et la seconde puissance de base de référence (W$_{BASE\_ACT}$); le dispositif étant **caractérisé en ce que** le premier module de calcul (16) est configuré pour calculer la seconde puissance de base de référence (W$_{BASE\_ACT}$) dans des conditions environnementales réelles sur la base de la première puissance de base de référence (W$_{BASE\_ISO}$) dans des conditions environnementales standard, et sur la base des valeurs d'une température environnementale réelle (T$_{ACT}$) et d'une pression environnementale réelle (P$_{ACT}$).

Fig. 1

DETECTION

$T_{ACT}, p_{ACT}$

$TETC_{ACT}$

$W_{ACT}$

ACTUATOR

FUEL regulation

IGV regulation

EP 2 249 006 B1

Fig. 2

EP 2 249 006 B1

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2006042258 A
- EP 1036924 A
- GB 1374871 A

### Non-patent literature cited in the description

- Development of a dynamical model for customers gas turbine generator in industrial power systems. **WATANABE M et al.** POWER AND ENERGY CONFERENCE, 2008. PECON 2008. IEEE 2ND INTERNATIONAL. IEEE, 01 December 2008, 514-519